# EUROPÄISCHE PATENTSCHRIFT

(11) **EP 2 641 488 B1**
(45) Veröffentlichungstag und Bekanntmachung des Hinweises auf die Patenterteilung: **05.12.2018**
(21) Anmeldenummer: 13159785.8
(22) Anmeldetag: 18.03.2013
(51) Int. Cl.: A24C 5/34, G01N 21/952, G05B 19/418

(54) **Messanordnung zum Messen von in Strangmaschinen der Tabak verarbeitenden Industrie hergestellten und geförderten Strängen**
Measuring arrangement for measuring rods manufactured and conveyed in rod-making machines of the tobacco-producing industry
Dispositif de mesure pour la mesure de tiges fabriquées et transportées dans des machines de fabrication de tiges de l'industrie de traitement du tabac

(30) Priorität: 20.03.2012 DE 102012102338
(43) Veröffentlichungstag der Anmeldung: 25.09.2013
(73) Patentinhaber: Hauni Maschinenbau GmbH, 21033 Hamburg (DE)
(72) Erfinder: Giese, Jürgen, 21493 Schwarzenbek (DE); Meins, Karsten, 21481 Lauenburg (DE); Junge, Christian, 21039 Escheburg (DE); Siems, Wolfgang, 22119 Hamburg (DE); Barkhan, Teut, 21465 Wentorf (DE); Buck, Jan, 21365 Adendorf (DE); Knopp, Reiner, 21465 Reinbek (DE)
(74) Vertreter: Stork Bamberger Patentanwälte PartmbB

(56) Entgegenhaltungen:
- US-A1- 2004 102 864
- US-A1- 2011 162 665

## Beschreibung

Die vorliegende Erfindung betrifft eine Messanordnung zum Messen von in Strangmaschinen und/oder Filteransetzmaschinen oder Multifilterherstellungsmaschinen hergestellten und geförderten Strängen und/oder Strangabschnitten und/oder stabförmigen Artikeln der Tabak verarbeitenden Industrie, umfassend einen Messkopf, der mindestens zwei Messmodule unterschiedlicher Messfunktion und eine Steuerungs- und Verarbeitungseinrichtung aufweist, wobei die Messmodule jeweils über mindestens eine Messdatenschnittstelle zur Übermittlung der von den Messmodulen erzeugten Messdaten an die Steuerungs- und Verarbeitungseinrichtung sowie über eine Steuerungsschnittstelle zur Steuerung und/oder Parametrierung der Messmodule mit der Steuerungs- und Verarbeitungseinrichtung verbunden sind.

Ferner betrifft die Erfindung eine Strangmaschine und/oder Filteransetzmaschinen oder Multifilterherstellungsmaschinen zum Herstellen von Strängen und/oder Strangabschnitten und/oder stabförmigen Artikeln der Tabak verarbeitenden Industrie mit einer Messanordnung.

Des Weiteren betrifft die Erfindung ein Verfahren zum Messen von in Strangmaschinen der Tabak verarbeitenden Industrie hergestellten und geförderten Strängen und/oder Strangabschnitten mittels einer Messanordnung, umfassend einen Messkopf, der mindestens zwei Messmodule unterschiedlicher Messfunktion und eine Steuer- und Verarbeitungseinrichtung aufweist, umfassend Übermitteln der von den Messmodulen erzeugten Messdaten an die Steuerungs- und Verarbeitungseinrichtung.

Derartige Messanordnungen, Strangmaschinen und Verfahren zum Messen sind aus dem Stand der Technik bekannt. Derartige Strangmaschinen der Tabak verarbeitenden Industrie sind hinlänglich bekannt. Eine Strangmaschine für Tabakstränge ist beispielsweise der EP 1 516 545 A1 aus dem Hause der Anmelderin zu entnehmen, während die EP 2 1325 683 A1 eine solche Strangmaschine aus dem Hause der Anmelderin für Filter offenbart.

Mittels der bekannten Messanordnungen werden die in Einzelstrang- oder Mehrstrangmaschinen hergestellten Stränge oder Strangabschnitte aus Tabak, Filtermaterial oder anderen zur Herstellung von (Filter)-Zigaretten, Zigarillos oder dergleichen geeignete Materialen und Materialmischungen, wie beispielsweise Multisegmentfilter oder mit Wirkstoffeinheiten dotierte Faserstränge, auf ihre physikalischen Eigenschaften bzw. Materialparameter oder sonstigen herstellungsrelevante Größen untersucht. Beispielsweise dient die Messanordnung der Bestimmung der Dichte, Feuchte, des Durchmessers oder der Überprüfung auf das Vorhandensein von Fremdkörpern und/oder Verschmutzungen. Die Stränge bzw. Strangabschnitte werden dazu kontinuierlich durch die Messanordnung gefördert.

Aus der US 7 079 912 B2 ist ein System und ein Verfahren für eine Steuerung zum Ausschleusen von Produkten bei der Herstellung von Zigaretten bekannt, die eine vorgegebene Spezifikation nicht erfüllen. Hierzu sind entlang der Produktionslinie mehrere Sensoren angeordnet, die mit einer zentralen Prozessoreinheit verbunden sind. Sofern einer der Sensoren eine Abweichung der gemessenen Eigenschaften von den vorgegebenen Solleigenschaften detektiert, wird mittels der zentralen Prozessoreinheit ein Ausschleusen des entsprechenden Produkts veranlasst. Die von den Sensoren bereitgestellten Daten werden mittels der Prozessoreinheit mit in der Maschine erzeugten und ebenfalls an die Prozessoreinheit übermittelten Zeitsignalen verknüpft bzw. einander zugeordnet. Mit anderen Worten führt ausschließlich die zentrale Prozessoreinheit den gesamten Zuordnungsvorgang der von den Sensoren bereitgestellten Daten aus. Nachteilig ist, dass hierzu sämtliche Sensoren unmittelbar mit der zentralen Prozessoreinheit verbunden sind, damit die von den Sensoren erzeugten Daten der zentralen Prozessoreinheit unmittelbar und ohne Zeitverlust zur weiteren Verarbeitung zur Verfügung stehen. Damit ist einerseits ein entsprechend hoher Hardwareaufwand verbunden, um die jeweiligen Verbindungen zwischen den Sensoren und der zentralen Prozessoreinheit bereitzustellen. Andererseits wird ein Großteil der insgesamt zur Verfügung stehenden Rechenzeit der Prozessoreinheit für die Zuordnung der Sensordaten verwendet.

Es ist daher Aufgabe der vorliegenden Erfindung, eine Messanordnung mit geringem Hardwareaufwand vorzuschlagen. Des Weiteren besteht die Aufgabe darin, eine entsprechende Strangmaschine sowie ein entsprechendes Verfahren vorzuschlagen.

Die Aufgabe wird durch eine Anordnung mit den eingangs genannten Merkmalen dadurch gelöst, dass die Steuerungs- und Verarbeitungseinrichtung mindestens einen zur zeitlichen Steuerung der Messmodule und zur Kennzeichnung der jeweiligen von den Messmodulen erzeugten Messdaten mittels zeitlicher Kennungen eingerichteten und ausgebildeten Taktgenerator umfasst und die Steuerungs- und Verarbeitungseinrichtung über mindestens eine zur Übermittlung der zeitlich gekennzeichneten Messdaten ausgebildete erste Datenschnittstelle mit einer, insbesondere räumlich getrennt angeordneten, Auswerteeinrichtung verbunden ist, wobei die Auswerteeinrichtung eine zur zeitlichen Zuordnung der über die erste Datenschnittstelle übermittelten und zeitlich gekennzeichneten Messdaten als zeitlich gekennzeichnete Messdaten von Messmodulen jeweils unterschiedlicher Messfunktion auf Basis der zeitlichen Kennungen ausgebildete Zuordnungseinheit und eine zum Analysieren der zeitlich zugeordneten Messdaten eingerichtete Analyseeinheit umfasst. Mit dieser erfindungsgemäßen Ausgestaltung ist es möglich, Messdaten mehrerer der Messmodule verschiedener Messfunktion miteinander anhand der zeitlichen Kennungen in Bezug zu setzen und zu analysieren. Anders ausgedrückt basiert die Analyse der Messdaten auf den Messdaten mindestens zweier Messmodule mit verschiedener Messfunktion. Des Weiteren ist es auf diese Weise möglich, die große von den Messmodulen generierte Datenmenge unter Beibehaltung der Deterministik und Konsistenz der Messdaten an die räumlich getrennt angeordnete Auswerteeinrichtung zu übermitteln. Folglich können die Messdaten mittels einer einzigen Datenschnittstelle übermitteln werden, so dass der Hardwareaufwand gegenüber den aus dem Stand der Technik bekannten Lösungen wesentlich reduziert wird. Dies wirkt sich insbesondere bei der genannten räumlichen Trennung der Messmodule von der Auswerteeinrichtung günstig aus. Ein weiterer Vorteil besteht darin, dass die an die Auswerteeinheit übermittelten Daten zeitlich gekennzeichnet sind, so dass hierfür seitens der Auswerteeinheit keine weiteren (Rechzeit-)Ressourcen bereitgestellt werden müssen.

Eine zweckmäßige Ausgestaltung der Erfindung ist dadurch gekennzeichnet, dass die Analyseeinheit zur Analyse der zeitlich gekennzeichneten Messdaten mit jeweils gleichen und/oder jeweils voneinander verschiedenen der zeitlichen Kennungen ausgebildet und eingerichtet ist. Dies bietet den Vorteil, dass die Messdaten auf Basis der zeitlichen Kennungen zueinander in Bezug gesetzt werden können. Der zeitliche Bezug der Messdaten wird auf diese Weise in der Auswerteeinrichtung rekonstruiert, selbst wenn die Übermittlung der zeitlich gekennzeichneten Messdaten über die erste Datenschnittstelle, beispielsweise aus Auslastungsgründen der ersten Datenschnittstelle und/oder der Übermittelung über weitere Datenschnittstellen, in einer abweichenden Reihenfolge erfolgt.

Eine bevorzugte Weiterbildung der Erfindung zeichnet sich dadurch aus, dass die Zuordnungseinheit eine Speicherzugriffssteuerung zum zyklischen Speichern der über die erste Datenschnittstelle übermittelten zeitlich gekennzeichneten Messdaten in mindestens einem Speichermittel mit mehreren Speicherbereichen umfasst. Das zyklische Speichern der zeitlich gekennzeichneten Messdaten gewährleistet einen hohen Datendurchsatz, da die zeitlich gekennzeichneten Messdaten sequentiell in der Reihenfolge ihres Eintreffens mittels der Speicherzugriffssteuerung in den mehreren Speicherbereichen gespeichert werden.

Gemäß einer weiteren bevorzugten Ausbildung der Erfindung umfasst die Analyseeinheit mindestens eine programmierbare Steuerung zur Ausführung mindestens eines Analyseprogramms, wobei die programmierbare Steuerung zum Zugriff auf jeden der Speicherbereiche ausgebildet und eingerichtet ist. Dies bietet den Vorteil, dass die Analyseeinheit auf sämtliche in den Speicherbereichen gespeicherten und zeitlich gekennzeichneten Messdaten zu Analysezwecken zugreifen kann, so dass die Analyse auf eine Vielzahl von Messdaten von Messmodulen unterschiedlicher Messfunktion gestützt ist.

Eine weitere zweckmäßige Ausbildung der Erfindung ist dadurch gekennzeichnet, dass die Steuerungs- und Verarbeitungseinrichtung sowie die Auswerteeinrichtung eine zum Übermitteln von Steuerungs- und/oder Parametrierungsdaten zwischen der Steuerungs- und Verarbeitungseinrichtung und der Auswerteeinrichtung ausgebildete zweite Datenschnittstelle umfasst. Damit können die Steuerungs- und/oder Parametrierungsdaten separat übertragen werden. Anders ausgedrückt sind die Schnittstellen für die Übertragung von Messdaten sowie Steuerungs- und/oder Parametrierungsdaten voneinander physikalisch getrennt ausgebildet. Die Messdatenübermittlung, an die hohe Anforderungen hinsichtlich der Übertragungsgeschwindigkeit bzw. geringer Latenzzeiten gestellt werden, ist so unabhängig von Übermittlung von Steuerungs- und/oder Parametrierungsdaten eingerichtet.

Eine weitere vorteilhafte Ausbildung der Erfindung zeichnet sich dadurch aus, dass die Steuerungs- und Verarbeitungseinrichtung eine Serialisierungseinheit umfasst, die zur Umwandlung der von den Messmodulen erzeugten Messdaten in einen seriellen Datenstrom ausgebildet und eingerichtet ist. Auf diese Weise können die Messdaten als serieller Datenstrom über eine geringe Anzahl an Leitungen bzw. Kanälen übertragen werden.

Gemäß einer weiteren bevorzugten Ausführungsform ist die erste Datenschnittstelle zur Übermittlung der zeitlich gekennzeichneten Messdaten in Echtzeit als Hochgeschwindigkeits-Schnittstelle eingerichtet. Besonders bevorzugt ist die erste Datenschnittstelle als LVDS-Schnittstelle (Low Voltage Diffential Signalling) eingerichtet ist. So können große Datenmengen, beispielsweise hochauflösende Bilddaten, ohne nennenswerten Zeitverzug störungsfrei übermittelt werden.

Eine weitere zweckmäßige Ausgestaltung der Erfindung ist dadurch gekennzeichnet, dass die erste Datenschnittstelle unidirektional zur Übermittlung der zeitlich gekennzeichneten Messdaten von der Steuerungs- und Verarbeitungseinrichtung an die Auswerteeinrichtung und die zweite Datenschnittstelle bidirektional ausgebildet ist. Aufgrund der unidirektionalen Ausgestaltung der ersten Datenschnittstelle wird der Aufwand zur Realisierung des erforderlichen Schnittstellenprotokolls im Umfang wesentlich reduziert, was eine hohe Datenrate impliziert und den Schnittstellenprotokollaufwand zugleich auf ein Minimum reduziert.

Gemäß einer weiteren bevorzugten Ausbildung der Erfindung umfasst die Auswerteeinrichtung eine Messmodulerkennungseinheit, die zur Ermittlung von den Messmodulen jeweils zugeordneten Modulkennungen über die zweite Datenschnittstelle ausgebildet und eingerichtet ist. Dies bietet den Vorteil, dass verschiedene Messmodulkonfigurationen automatisch mittels der Auswerteeinrichtung erkannt werden können. Anders ausgedrückt ist die Auswerteeinrichtung zur automatischen Erkennung der Messmodule eingerichtet und ausgebildet. Eine Änderung der Messmodulkonfiguration, beispielsweise durch den Austausch einzelner der Messmodule gegen ein Messmodul mit einer anderen Messfunktion, kann so unmittelbar erkannt und bei der Analyse der Daten mittels der Analyseeinheit berücksichtigt werden.

Die Aufgabe wird auch durch eine Strangmaschine der eingangs genannten Art dadurch gelöst, dass die Messanordnung nach einem der Ansprüche 1 bis 9 ausgebildet ist. Die sich daraus ergebenden Vorteile wurden bereits im Zusammenhang mit der Messanordnung beschrieben, weshalb zur Vermeidung von Wiederholungen auf die entsprechenden Passagen verwiesen wird.

Des Weiteren wird die Aufgabe durch ein entsprechendes Verfahren mit den eingangs genannten Merkmalen gelöst durch zeitliches Steuern der Messmodule über eine Steuerungsschnittstelle zur Steuerung und/oder Parametrierung der Messmodule, Kennzeichnen der jeweiligen von den Messmodulen erzeugten Messdaten mittels zeitlicher Kennungen, Übermitteln der zeitlich gekennzeichneten Messdaten von der Steuerungs- und Verarbeitungseinrichtung an eine, insbesondere räumlich getrennt angeordnete, Auswerteeinrichtung über mindestens eine erste Datenschnittestelle, Zuordnen der über die erste Datenschnittstelle an die Auswerteeinrichtung übermittelten und zeitlich gekennzeichneten Messdaten von Messmodulen jeweils unterschiedlicher Messfunktion auf Basis der zeitlichen Kennungen und Analysieren der zeitlich zugeordneten Messdaten. Dies bietet, neben den bereits im Zusammenhang mit der erfindungsgemäßen Messanordnung erläuterten Vorzügen, den Vorteil, Messdaten mehrerer der Messmodule verschiedener Messfunktion miteinander anhand der zeitlichen Kennungen in Bezug zu setzen und zu analysieren. Die Analyse der Messdaten erfolgt also auf Basis der Messdaten mindestens zweier Messmodule verschiedener Messfunktionen. Ferner wird so die Übermittlung großer von den Messmodulen generierter Datenmengen unter Beibehaltung der Deterministik und Konsistenz an die, ggf. räumlich getrennt angeordnete, Auswerteeinrichtung ermöglicht.

Eine zweckmäßige Weiterbildung zeichnet sich dadurch aus, dass das Analysieren der zeitlich gekennzeichneten Messdaten mit jeweils gleichen und/oder jeweils voneinander verschiedenen der zeitlichen Kennungen erfolgt. Dies bietet den Vorteil, dass die Messdaten auf Basis der zeitlichen Kennungen zueinander in Bezug gesetzt werden. Der zeitliche Bezug der Messdaten wird auf diese Weise grundsätzlich in der Auswerteeinrichtung rekonstruiert, selbst wenn die Übermittlung der zeitlich gekennzeichneten Messdaten über die erste Datenschnittstelle, beispielsweise aus Auslastungsgründen der ersten Datenschnittstelle und/oder der Übermittelung über weitere Datenschnittstellen, in einer abweichenden Reihenfolge erfolgt.

Eine besonders bevorzugte Ausführung der Erfindung ist gekennzeichnet durch zyklisches Speichern der über die erste Datenschnittstelle an die Auswerteeinrichtung übermittelten zeitlich gekennzeichneten Messdaten in mindestens einem Speichermittel mit mehreren Speicherbereichen. Das zyklische Speichern der zeitlich gekennzeichneten Messdaten gewährleistet einen hohen Datendurchsatz, da die zeitlich gekennzeichneten Messdaten sequentiell in der Reihenfolge ihres Eintreffens mittels der Speicherzugriffssteuerung in den mehreren Speicherbereichen gespeichert werden.

Eine weitere vorteilhafte Weiterbildung zeichnet sich durch Ausführen mindestens eines Analyseprogramms mittels einer programmierbaren Steuerung aus, wobei das Analyseprogramm auf jeden der mehreren Speicherbereiche zugreifen kann. Dies bietet den Vorteil, dass das Analyseprogramm zum Zugriff auf sämtliche in den Speicherbereichen gespeicherten und zeitlich gekennzeichneten Messdaten ausgebildet ist, so dass die Analyse der auf eine Vielzahl von Messdaten von Messmodulen unterschiedlicher Messfunktion gestützt ist.

Gemäß einer besonders bevorzugten Ausführung erfolgt die Übermittlung der zeitlich gekennzeichneten Messdaten über die erste Datenschnittstelle unidirektional von der Steuerungs- und Verarbeitungseinrichtung an die Auswerteeinrichtung. Die unidirektionale Übermittlung reduziert den Aufwand für die notwendigen Schnittstellenprotokollschritte maßgeblich, so dass eine hohe Datenrate bereitgestellt wird und zugleich der erforderliche Schnittstellenprotokollaufwand auf ein Minimum reduziert ist.

Eine weitere vorteilhafte Ausgestaltung der Erfindung zeichnet sich durch das Ermitteln von den Messmodulen jeweils zugeordneten Modulkennungen über eine zweite Datenschnittstelle aus. Dies bietet den Vorteil, dass verschiedene Messmodulkonfigurationen automatisch erkannt werden. Eine Änderung der Messmodulkonfiguration, beispielsweise durch den Austausch einzelner der Messmodule oder im Wege einer Maschinenumrüstung, wird so unmittelbar und automatisch erkannt.

Gemäß einer weiteren bevorzugten Ausgestaltung werden die Messdaten mittels einer Serialisierungseinheit serialisiert und die serialisierten und zeitlich gekennzeichneten Messdaten an eine Zuordnungseinheit der Auswerteinrichtung übermittelt. Auf diese Weise können die Messdaten als serieller Datenstrom über eine geringe Anzahl an Leitungen bzw. Kanälen übertragen werden. Mittels der Zuordnungseinheit werden die als serieller Datenstrom übermittelten Messdaten anschließend wieder entsprechend zeitlich zugeordnet.

Weitere bevorzugte und/oder zweckmäßige Merkmale und Ausgestaltungen der Erfindung ergeben sich aus den Unteransprüchen und der Beschreibung. Besonders bevorzugte Ausführungsformen werden anhand der beigefügten Zeichnung näher erläutert. In der Zeichnung zeigt
- Fig. 1: eine Bockschaltbild der erfindungsgemäßen Messanordnung,
- Fig. 2: eine schematische Darstellung einer Strangmaschine mit der erfindungsgemäßen Messanordnung und
- Fig. 3: eine schematische Darstellung der Struktur eines beispielhaften Analyseprogramms.

Die in der Zeichnung dargestellte Messanordnung dient zum Messen eines einzelnen Tabakstrangs. Selbstverständlich umfasst die Erfindung auch Messanordnungen für zwei, insbesondere für zwei parallel geführte, oder mehrere Stränge. Die Erfindung ist ferner nicht auf das Messen von Tabaksträngen beschränkt. Vielmehr können auch Filterstränge oder Stränge und Strangabschnitte aus anderen Materialien bzw. Materialmischungen, wie beispielsweise Multisegmentfilterstränge oder mit Kapseln dotierte Faserstränge, der Tabak verarbeitenden Industrie mittels der erfindungsgemäßen Messanordnung gemessen werden.

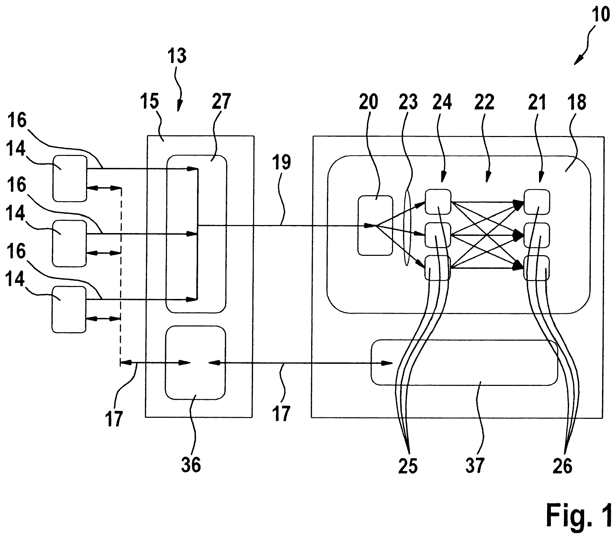

Die Erfindung betrifft einen Messanordnung 10 von in Strangmaschinen 11 und/oder Filteransetzmaschinen oder Multifilterherstellungsmaschinen hergestellten und geförderten Strängen 12 und/oder Strangabschnitten und/oder stabförmigen Artikeln der Tabak verarbeitenden Industrie. In der Figur 1 ist anhand eines Blockschaltbilds eine beispielhafte Ausführung der erfindungsgemäßen Messanordnung 10 gezeigt. Die Messanordnung 10 umfasst einen Messkopf 13, der zwei oder mehrere Messmodule 14 umfasst. Die Messmodule 14 sind zur Messung verschiedener physikalischer Größen des Strangs 12 bzw. der Strangabschnitte ausgebildet und eingerichtet. Mindestens zwei der Messmodule 14 weisen unterschiedliche Messfunktionen auf. Anders ausgedrückt sind mindestens zwei der Messmodule 14 zur Messung verschiedener physikalischer Größen des Strangs 12 bzw. der Strangabschnitte ausgebildet. Die Messmodule 14 sind dabei bevorzugt als mechanische, pneumatische, optische (im sichtbaren und nicht sichtbaren Wellenlängenbereich) oder elektromagnetische Sensoren ausgebildet. Besonders bevorzugt kommen als Messmodule 14 die nachfolgend genannten Messsysteme aus dem Hause der Anmelderin zum Einsatz: ORIS (Optical Rod Inspection System), OCIS (Optical Cigarette Inspection System), ODM (optisches Durchmessermesssystem), IRIS (Infrared Rod Inspection System), MIDAS (Mikrowelle-Feuchte-/Dichtemesssystem) und/oder LES (Loose End Sensor). Selbstverständlich stellen die vorgenannten Messsysteme keine abschließende Aufzählung dar, so sind beispielsweise auch kapazitive, induktive, HF- und/oder IR-Messsysteme umfasst. Vielmehr ist jede Sensoranordnung als Messmodul 14 geeignet.

Der Messkopf 13 umfasst ferner eine Steuerungs- und Verarbeitungseinrichtung 15. Die Messmodule 14 sind jeweils über eine Messdatenschnittstelle mit der Steuerungs- und Verarbeitungseinrichtung 15 verbunden. Die Messdatenschnittstelle ist zur Übermittlung der von den Messmodulen 14 erzeugten Messdaten 16 an die Steuerungs- und Verarbeitungseinrichtung 15 ausgebildet. Vorzugsweise ist die Messdatenschnittstelle eine echtzeitfähige Hochgeschwindigkeitsschnittstelle, beispielsweise eine Peer-to-Peer-Leitung, um die von den Messmodulen erzeugte Datenmenge ohne Verzögerung (Latency) an die Steuerungs- und Verarbeitungseinrichtung 15 zu leiten. Anders ausgedrückt ist die Steuerungs- und Verarbeitungseinrichtung 15 als Router ausgebildet und eingerichtet.

Besonders bevorzugt sind die Messmodule 14 derart ausgebildet und eingerichtet, dass die erzeugten Messdaten 16 als Rohdaten vorliegen, beispielsweise bei als Bildsensoren ausgebildeten Messmodulen 14 in Form digitaler Bildrohdaten. Alternativ können die Messmodule 14 eine Vorverarbeitungseinheit umfassen mittels derer die Rohdaten einem Vorverarbeitungsprozess unterzogen werden, z.B. um die Rohdaten hinsichtlich des Datenvolumens zu komprimieren und/oder um die Rohdaten einer Voranalyse zu unterziehen.

Die Messmodule 14 sind ferner über eine Steuerungsschnittstelle zur Steuerung und/oder Parametrisierung der Messmodule 14 mit der der Steuerungs- und Verarbeitungseinrichtung 15 verbunden. Die Steuerungsschnittstellte ist zur Übermittlung von Steuerungs- und Parametrisierungsdaten 17 ausgebildet und eingerichtet. Mittels der Steuerungs- und Parametrisierungsdaten 17 werden die Messmodule 14 einerseits parametrisiert, beispielsweise durch Vorgabe bestimmter Messparameter, und andererseits einzelne oder sich kontinuierlich wiederholende Messvorgänge initiiert oder angehalten.

Die Steuerungs- und Verarbeitungseinrichtung 15 umfasst ferner einen Taktgenerator. Der Taktgenerator ist einerseits zur zeitlichen Steuerung der Messmodule 14 ausgebildet, d.h. der Taktgenerator ist eingerichtet, die Zeitpunkte, zu denen die jeweiligen Messmodule 14 eine Messung durchführen, vorzugeben. Vorzugsweise ist der Taktgenerator zur Erzeugung eines Taktes bzw. zur Bestimmung der vorgenannten Zeitpunkte auf Basis des Maschinen- bzw. des Schnitttakts ausgebildet und eingerichtet ist. Anders ausgedrückt wird der Takt als vom Maschinen- bzw. Schnitttakt abgeleitet.

Der Taktgenerator umfasst daher vorzugweise den in der Maschine vorhandenen Maschinentaktgenerator .

Besonders bevorzugt sind die Messmodule 14 sequentiell angeordnet, so dass die Messmodule 14 eine Messstrecke für den durch oder an diesem vorbei geförderten Strang 12 bzw. Strangabschnitt bilden. Die durch den Taktgenerator vorgegebenen Messzeitpunkte der einzelnen Messmodule 14 können sowohl zeitlich synchron als auch zeitlich versetzt sein. Der Taktgenerator ist weiter ausgebildet, die von den jeweiligen Messmodulen 14 erzeugten Messdaten 16 mit zeitlichen Kennungen zu kennzeichnen. Anders ausgedrückt ist der Taktgenerator dazu eingerichtet, den Messdaten 16 eine zeitliche Kennung zuzuordnen, anhand derer der Zeitpunkt der Erzeugung der jeweiligen Messdaten eindeutig rekonstruierbar ist. Vorzugsweise ist der Taktgenerator zusammen mit der Steuerungs- und Verarbeitungseinrichtung 15 in einer FPGA oder CPLD implementiert. Die zeitliche Kennung kann beispielsweise als Zeitstempel ausgebildet sein, der als Header-Information eines Datenrahmens zu den Messdaten 16 hinzugefügt wird. Alternativ werden die zeitlichen Kennungen durch den Taktgenerator vorgegeben, d.h. die Messdaten 16 werden zeitlich synchron zum Takt des Taktgenerators, vorzugsweise zeitlich synchron zum Maschinentakt, erfasst und anschließend an die Auswerteeinrichtung 18 übermittelt. Die im Folgenden beschriebene Zuordnung der übermittelten Messdaten mittels der Auswerteeinrichtung 18 erfolgt in diesem Fall ebenfalls auf Basis des Taktes.

Die Steuerungs- und Verarbeitungseinrichtung 15 ist über eine erste Datenschnittstelle mit einer Auswerteeinrichtung 18, die im Ausführungsbeispiel räumlich getrennt von der Steuerungs- und Verarbeitungseinrichtung 15 angeordnet ist, verbunden. Die erste Datenschnittstelle ist zur Übermittlung der zeitlich gekennzeichneten Messdaten 19 von der Steuerungs- und Verarbeitungseinrichtung 15 an die Auswerteeinrichtung 18 ausgebildet und eingerichtet. Die Auswerteeinrichtung 18 umfasst eine Zuordnungseinheit 20 und eine Analyseeinheit 21. Die Zuordnungseinheit 20 ist zur zeitlichen Zuordnung der über die erste Datenschnittstelle übermittelten Messdaten 19 auf Basis der zeitlichen Kennungen ausgebildet und eingerichtet. Ferner ist die Analyseeinheit 21 ausgebildet, die durch die Zuordnungseinheit 20 zeitlich zugeordneten Messdaten 22 zu analysieren. Anders ausgedrückt sind die Zuordnungseinheit 20 und die Analyseeinheit 21 derart ausgebildet und eingerichtet, dass die Messdaten 16 mehrerer der Messmodule 14 unterschiedlicher Messfunktion zueinander in Bezug gesetzt und so miteinander korreliert werden, um weitere Informationen über den gemessenen Strang 12 bzw. Strangabschnitt zu ermitteln.

Vorteilhafterweise ist die Analyseeinheit 21 zur Analyse der zeitlich zugeordneten Messdaten 22 mit jeweils gleichen und/oder voneinander verschiedenen der zeitlichen Kennungen ausgebildet und eingerichtet. Anders ausgedrückt ist die Analyseeinheit 21 dazu eingerichtet, die Analyse von zeitlich zugeordneten Messdaten 22 durchzuführen, die zum selben Zeitpunkt erzeugt worden sind und/oder von zeitlich zugeordneten Messdaten 22, die zu unterschiedlichen Zeitpunkten erzeugt worden sind. Umfasst - wie in der Figur 1 beispielhaft gezeigt - der Messkopf 13 drei der Messmodule 14 mit unterschiedlichen Messfunktionen, die wie eingangs erwähnt beispielsweise sequentiell unter Bildung einer Messstrecke angeordnet sind, so ist aus der Fördergeschwindigkeit des Strangs 12 bzw. der Strangabschnitte und dem räumlichen Abstand der jeweiligen Messmodule 14 diejenige Zeitdifferenz ableitbar, die der Strang zum Fortbewegen von einem der Messmodule 14 zu einem anderen der Messmodule 14 benötigt. Mittels der Analyse der zeitlich zugeordneten Messdaten 22 mit den entsprechenden zeitlichen Kennungen ist es so möglich, die zeitlich zugeordneten Messdaten 22 von Messmodulen 14 jeweils verschiedener Messfunktion zu analysieren und auszuwerten, um weitergehende Informationen über den gemessenen Bereich des Strangs 12 bzw. des Strangabschnitts zu erhalten. Grundsätzlich können somit eine Vielzahl von Messdaten 16 bzw. der zeitlich zugeordneten Messdaten 22 miteinander kombiniert und als Ausgangspunkt für die Analyse herangezogen werden.

Mögliche Basis für die Analyse bzw. für die Analyseeinheit 21 ist beispielsweise eine Kombination der folgenden Messdaten 16, 22: optischer Strangsensor und/oder optischer Zigaretteninspektionssensor mit einer Klebestellenlichtschranke, Mikrowellensensormodul mit einem HF-Modul, optischer Strangsensor und/oder optischer Zigaretteninspektionssensor mit Multifilterpositionssensor, optischer Strangsensor und/oder optischer Zigaretteninspektionssensor mit einem Stempellagesensor, Mikrowellensensormodul mit optischen Durchmessersensor- und Zugwiderstandsmessdaten, optischer Zigaretteninspektionssensor mit Ventilationsmessdaten, Mikrowellensensormodul mit Kopf- oder Stirnseitensensor, optischer Zigaretteninspektionssensor mit Ventilationsmessdaten, optischer Zigaretteninspektionssensor mit optischem Strangsensor und Mikrowellensensormodul mit Infrarot-Stranginspektionssensor/-system. Die vorstehend genannten Kombinationen sind selbstverständlich nicht abschließend und stellen nur eine beispielhafte Auswahl der möglichen Kombinationen dar. Grundsätzlich ist jede Kombination von Messdaten 16, 22 unterschiedlicher oder gleicher Messfunktionen als Ausgangspunkt geeignet.

Bevorzugt umfasst die Zuordnungseinheit 20 eine Speicherzugriffssteuerung 23 zum zyklischen Speichern der über die erste Datenschnittstelle übermittelten zeitlich gekennzeichneten Messdaten 22 in mindestens einem Speichermittel 24 mit mehreren Speicherbereichen 25. Die Speicherzugriffssteuerung 23 ist vorzugsweise derart ausgebildet, dass die über die erste Datenschnittstelle übermittelten zeitlich gekennzeichneten Messdaten 22 in der Reihenfolge ihres Eintreffens, vorzugsweise sequentiell, in den Speicherbereichen 25 gespeichert werden. Alternativ werden die zeitlich gekennzeichneten Messdaten 22 nach anderen Kriterien, beispielsweise nach der Messfunktion des jeweiligen Messmoduls 14 sortiert, in den Speicherbereichen 25 gespeichert.

Weiter bevorzugt umfasst die Analyseeinheit 21 mindestens eine programmierbare Steuerung zur Ausführung mindestens eines Analyseprogramms 26. Das mindestens eine Analyseprogramm 26 ist zur Analyse der in den Speicherbereichen 25 gespeicherten und zeitlich zugeordneten Messdaten 22 eingerichtet und ausgebildet. Hierzu ist die programmierbare Steuerung zum Zugriff auf jeden der Speicherbereiche 25 ausgebildet und eingerichtet. Jedes der Analyseprogramme 26 hat somit Vollzugriff auf sämtliche der zeitlich zugeordneten Messdaten 22.

Gemäß einer weiter bevorzugte Ausführung der Erfindung umfassen die Steuerungs- und Verarbeitungseinrichtung 15 sowie die Auswerteeinrichtung 18 eine zweite Datenschnittstelle, die zum Übermitteln von Steuerungs- und /oder Parametrierungsdaten 17 zwischen der Steuerungs- und Verarbeitungseinrichtung 15 und der Auswerteeinrichtung 18 ausgebildet ist. Die zweite Datenschnittstelle ist vorzugsweise als elektrische oder optische Schnittstelle ausgebildet und eingerichtet. Besonders bevorzugt ist die zweite Datenschnittstelle als Feldbus, bzw. als ethernetbasiertes Feldbussystem, als EtherCat- oder Profi-Bussystem ausgebildet. Die Steuerungs- und Verarbeitungseinrichtung 15 sowie die Auswerteeinrichtung 18 umfassen hierzu entsprechende Schnittstellbausteine 36, 37.

Vorteilhafter Weise ist die erste Datenschnittstelle als Hochgeschwindigkeits-Schnittstelle zur Übermittelung der zeitlich gekennzeichneten Messdaten 19 in Echtzeit ausgebildet und eingerichtet. Besonders bevorzugt ist das zugehörige Schnittstellenprotokoll für die Übermittlung von Daten mit einer hohen Datenrate und möglichst geringer Latenz angepasst. Auf physikalischer Ebene ist die Datenschnittstelle bevorzugt als LVDS (Low Voltage Diffential Signalling) - Schnittstelle ausgebildet. In diesem Fall ist die erste Datenschnittstelle als serielle Schnittestelle ausgebildet, so dass die Steuerungs- und Verarbeitungseinrichtung 15 eine Serialisierungseinheit 27 umfasst, die die von den Messmodulen 14 erzeugten Messdaten 16 in einen seriellen Datenstrom umsetzt. Alternativ ist die erste Datenschnittstelle als optische HochgeschwindigkeitsSchnittstelle ausgebildet.

Alternativ umfasst die erste Datenschnittstelle eine parallele Schnittstelle, so dass die Serialisierungseinheit 27 entfallen kann. Es ist auch möglich, dass die erste Datenschnittstelle mehrere parallel geschaltete serielle Schnittstellen aufweist.

Gemäß einer weiter vorteilhaften Ausführung der Erfindung ist die erste Datenschnittstelle unidirektional ausgebildet, so dass die Richtung der zeitlich gekennzeichneten Messdaten 19 ausschließlich von der Steuerungs- und Verarbeitungseinrichtung 15 bzw. der Serialisierungseinheit 27 in Richtung der Auswerteeinrichtung 18 erfolgt. Des Weiteren ist die zweite Datenschnittstelle bidirektional ausgebildet.

Bevorzugt umfasst die Auswerteeinrichtung eine Messmodulerkennungseinheit, die zur Ermittlung von den Messmodulen 14 jeweils zugeordneten Modulkennungen ausgebildet und einreichtet ist. Vorzugsweise ist die Messmodulerkennungseinheit mit der zweiten Datenschnittstelle verbunden, so dass die Modulkennungen über diese abgefragt werden.

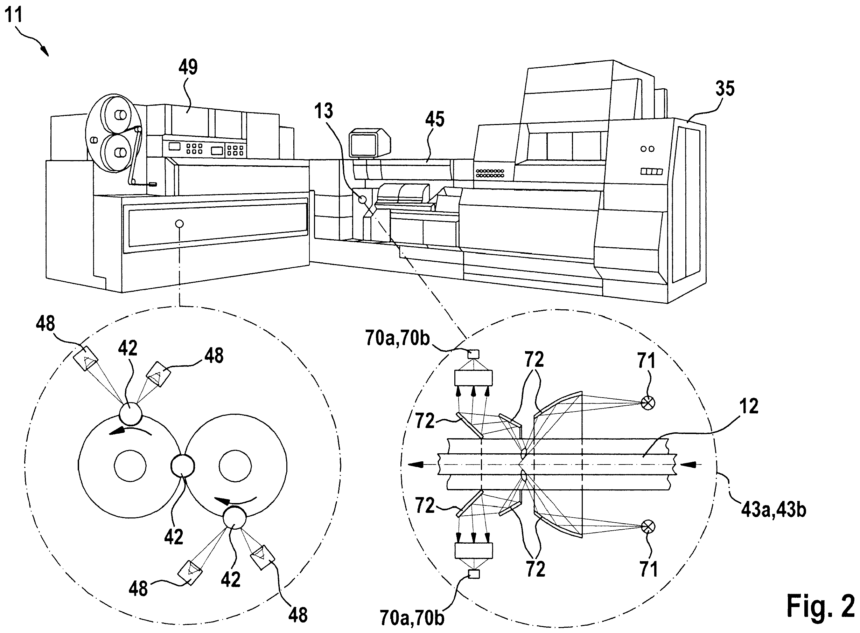

In der Figur 2 ist schematisch eine Maschine 11 zur Herstellung stabförmiger Artikel 42 der Tabak verarbeitenden Industrie, beispielsweise eine Zigarettenherstellungsmaschine vom Typ Protos aus dem Hause der Anmelderin, dargestellt. Die Maschine 11 umfasst eine Steuerungsvorrichtung mit einem ersten optoelektronischen Sensormittel 43a, 43b, das zur optischen Abtastung des Materialstrangs 12 und zur Erzeugung der entsprechenden Messdaten 16 ausgebildet und eingerichtet ist. Zur Umwandlung des jeweils abgetasteten Oberflächenbildes des Materialsstrangs 12 umfasst das erste optoelektronische Sensormittel 43a, 43b zumindest einen Bildsensor 70a, 70b, beispielsweise in Form einer CCD-Kamera und/oder einer CCD-Zeilenkamera. Die abzutastende Oberfläche des Materialstrang 12 wird über eine Spiegelanordnung 72 mit Licht einer Lichtquelle 71 beleuchtet und das von der Teiloberfläche reflektierte Licht von den Bildsensoren 70a, 70b aufgenommen und in entsprechende Messdaten 16 umgewandelt.

Die in der Figur 2 gezeigte Maschine 11 umfasst ferner eine Verteilereinheit 35 und eine Strangeinheit 45, in der von einer nicht gezeigten externen Beschickungsanlage geförderter Schnitttabak aufbereitet und zu zwei Tabaksträngen verarbeitet wird, die längsaxial durch die Maschine 11 gefördert werden. Der Strangeinheit 45 ist eine mehrbahnige Filteransetzmaschine 49, beispielsweise vom Typ MAX aus dem Hause der Anmelderin, nachgeordnet. Die Filteransetzmaschine 49 umfasst - wie im Detail dargestellt - ggf. weitere optische Sensormittel 48 zur Abtastung der stabförmigen Artikel 42.

Die zuvor beschriebenen Maschine 11 ist hinlänglich bekannt, so dass auf eine weitere detaillierte Beschreibung verzichtet wird. Die erfindungsgemäße Strangmaschine 11 zeichnet sich dadurch aus, dass die zuvor beschriebene Messanordnung 10 in diese integriert ist. Auf diese Weise ist es einerseits möglich, die Eigenschaften des Strangs 12 bzw. der Strangabschnitte kontinuierlich bzw. online zu messen und die mittels der Messmodule 14 erzeugten Messdaten 16 in einer separaten Auswerteeinrichtung 18, die hier räumlich entfernt von dem Messkopf 13 angeordnet ist, zu analysieren. Zur Vermeidungen von Wiederholungen sei auf die vorangehenden Ausführungen der Messanordnung 10 verwiesen.

Anhand der Figuren 1 und 2 soll im Folgenden der Vollständigkeit halber das Grundprinzip des zu der Messanordnung 10 korrespondierenden Verfahrens ergänzend erläutert werden, wobei hinsichtlich weiteren Details und möglicher Ausgestaltungen der Erfindungen auf die zuvor gemachten Ausführungen der Messanordnung 10 verwiesen wird. Das erfindungsgemäße Verfahren zum Messen von in Strangmaschinen 11 der Tabak verarbeitenden Industrie hergestellten und geförderten Strängen 12 und/oder Strangabschnitten mittels der Messanordnung 10, die den Messkopf 13, der mindestens zwei der Messmodule 14 unterschiedlicher Messfunktion und die Steuer- und Verarbeitungseinrichtung 15 aufweist, umfasst das Übermitteln der von den Messmodulen 14 erzeugten Messdaten 19 an die Steuerungs- und Verarbeitungseinrichtung 15 und zeichnet sich durch zeitliches Steuern der Messmodule 14 über eine Steuerungsschnittstelle zur Steuerung und/oder Parametrierung der Messmodule 14, Kennzeichnen der jeweiligen von den Messmodulen 14 erzeugten Messdaten 19 mittels zeitlicher Kennungen als zeitlich gekennzeichnete Messdaten 19, Übermitteln der zeitlich gekennzeichneten Messdaten 19 von der Steuerungs- und Verarbeitungseinrichtung 15 an die räumlich getrennt angeordnete Auswerteeinrichtung 18 über mindestens eine erste Datenschnittestelle, Zuordnen der über die erste Datenschnittstelle an die Auswerteeinrichtung 18 übermittelten und zeitlich gekennzeichneten Messdaten 19 von Messmodulen 14 jeweils unterschiedlicher Messfunktion auf Basis der zeitlichen Kennungen und Analysieren der zeitlich zugeordneten Messdaten 22 aus.

In Bezug auf die weiteren Ausgestaltungen des Verfahrens sei auf die vorangehend gemachten Ausführungen zu der erfindungsgemäßen Messanordnung 10 verwiesen, die zugleich das erfindungsgemäße Verfahren näher erläutern.

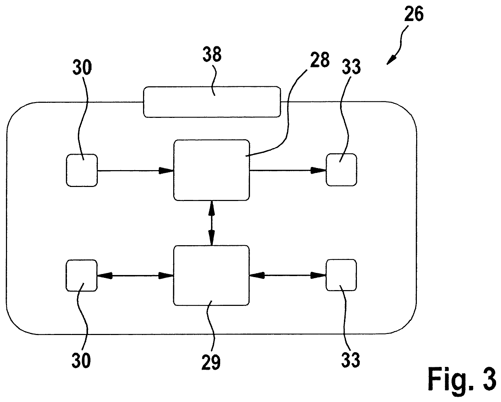

In der Figur 3 ist eine schematische Darstellung der Struktur eines beispielhaften Analyseprogramms 26 zur Durchführung des erfindungsgemäßen Verfahrens dargestellt. Vorzugsweise wird das Analyseprogramm 26 mittels der programmierbaren Steuerung ausgeführt. Das Analyseprogramm 26 umfasst mindestens eine Applikation 38, wobei diese mindestens zwei Programmebenen aufweist. Eine erste Programmebene ist bevorzugt zur Verarbeitung und Analyse von Daten unter Echtzeitbedingungen ausgebildet, während die zweite Ebene bevorzugt zur Verarbeitung von Daten ausgebildet ist, bei deren Verarbeitung keine besonderen Anforderungen hinsichtlich der Verarbeitungsgeschwindigkeit bzw. hinsichtlich etwaiger Echtzeitanforderungen gestellt werden. Das Analyseprogramm 26 umfasst mindestens ein erstes Teilprogramm 28 sowie ein zweites Teilprogramm 29, wobei das erste Teilprogramm 28 der ersten Ebene und das zweite Teilprogramm 29 der zweiten Ebene zugeordnet ist. Das erste Teilprogramm 28 bezieht die zu analysierenden Daten mittels einer ersten Dateneingabeschnittestelle 30. Vorzugsweise werden über die erste Dateneingabeschnittstelle 30 die in den Speicherbereichen 25 gespeicherten und zeitlich zugeordneten Messdaten 22 bereitgestellt. Das zweite Teilprogramm 29 bezieht und versendet Steuerungs- und Parametrierungsdaten 17 über eine zweite Dateneingabeschnittstelle 31. Mittels einer Verbindung 32 zwischen den beiden Ebenen der Teilprogramme 28, 29 interagieren diese miteinander. Das Teilprogramm 28 umfasst vorzugsweise eine Steuerungsschnittstelle 33 zur Steuerung der Strangmaschine 11, von Komponenten der Strangmaschine 11 oder weiteren maschinenbezogenen Einrichtungen. Auf diese Weise ist es möglich, Messdaten 16 in Echtzeit zu analysieren und - sofern erforderlich - unmittelbar in das Produktionsgeschehen einzugreifen. Beispielsweise wird über die Steuerungsschnittstelle 33 das Ausschleusen von fehlerhaften Strängen 12 bzw. Strangabschnitten gesteuert, sofern mittels eines oder mehreren der Analyseprogramme 26 Fehler oder Abweichungen von den gewünschten Eigenschaften des Strangs 11 bzw. eines der Strangabschnitte festgestellt werden. Das Teilprogramm 29 umfasst ferner eine Ein-/Ausgabeschnittestelle 34 für alle nicht echtzeitbezogenen Daten und Informationen, beispielsweise zur Ein- bzw. Ausgabe von Steuerungs- und Parametrierungsdaten und/oder zu deren Visualisierung.

## Patentansprüche

1. Messanordnung (10) zum Messen von in Strangmaschinen (11) und/oder Filteransetzmaschinen oder Multifilterherstellungsmaschinen hergestellten und geförderten Strängen (12) und/oder Strangabschnitten und/oder stabförmigen Artikeln der Tabak verarbeitenden Industrie, umfassend
einen Messkopf (13), der mindestens zwei Messmodule (14) unterschiedlicher Messfunktion und eine Steuerungs- und Verarbeitungseinrichtung (15) aufweist,
wobei die Messmodule (14) jeweils über mindestens eine Messdatenschnittstelle zur Übermittlung der von den Messmodulen (14) erzeugten Messdaten (16) an die Steuerungs- und Verarbeitungseinrichtung (15) sowie über eine Steuerungsschnittstelle zur Steuerung und/oder Parametrierung der Messmodule (14) mit der Steuerungs- und Verarbeitungseinrichtung (15) verbunden sind,
**dadurch gekennzeichnet, dass**
die Steuerungs- und Verarbeitungseinrichtung (15) mindestens einen zur zeitlichen Steuerung der Messmodule (14) und zur Kennzeichnung der jeweiligen von den Messmodulen (14) erzeugten Messdaten (16) mittels zeitlicher Kennungen als zeitlich gekennzeichnete Messdaten (19) eingerichteten und ausgebildeten Taktgenerator umfasst und
die Steuerungs- und Verarbeitungseinrichtung (15) über mindestens eine zur Übermittlung der zeitlich gekennzeichneten Messdaten (19) ausgebildete erste Datenschnittstelle mit einer, insbesondere räumlich getrennt angeordneten, Auswerteeinrichtung (18) verbunden ist,
wobei die Auswerteeinrichtung (18) eine zur zeitlichen Zuordnung der über die erste Datenschnittstelle übermittelten und zeitlich gekennzeichneten Messdaten (19) von Messmodulen (14) jeweils unterschiedlicher Messfunktion auf Basis der zeitlichen Kennungen ausgebildete Zuordnungseinheit (20) und eine zum Analysieren der zeitlich zugeordneten Messdaten eingerichtete Analyseeinheit (21) umfasst.

2. Messanordnung nach Anspruch 1, **dadurch gekennzeichnet, dass** die Analyseeinheit (21) zur Analyse der zeitlich gekennzeichneten Messdaten (19) mit jeweils gleichen und/oder jeweils voneinander verschiedenen der zeitlichen Kennungen ausgebildet und eingerichtet ist.

3. Messanordnung nach einem der Ansprüche 1 oder 2, **dadurch gekennzeichnet, dass** die Zuordnungseinheit (20) eine Speicherzugriffssteuerung (23) zum zyklischen Speichern der über die erste Datenschnittstelle übermittelten zeitlich gekennzeichneten Messdaten (19) in mindestens einem Speichermittel (24) mit mehreren Speicherbereichen (25) umfasst.

4. Messanordnung nach Anspruch 3, **dadurch gekennzeichnet, dass** die Analyseeinheit (21) mindestens eine programmierbare Steuerung zur Ausführung mindestens eines Analyseprogramms (26) umfasst, wobei die programmierbare Steuerung zum Zugriff auf jeden der Speicherbereiche (25) ausgebildet und eingerichtet ist.

5. Messanordnung nach einem der vorangehenden Ansprüche, **dadurch gekennzeichnet, dass** die Steuerungs- und Verarbeitungseinrichtung (15) sowie die Auswerteeinrichtung (18) eine zum Übermitteln von Steuerungs- und/oder Parametrierungsdaten zwischen der Steuerungs- und Verarbeitungseinrichtung (15) und der Auswerteeinrichtung (18) ausgebildete zweite Datenschnittstelle umfassen.

6. Messanordnung nach einem der vorangehenden Ansprüche, **dadurch gekennzeichnet, dass** die Steuerungs- und Verarbeitungseinrichtung (15), eine Serialisierungseinheit (27) umfasst, die zur Umwandlung der von den Messmodulen (14) erzeugten Messdaten (16) in einen seriellen Datenstrom ausgebildet und eingerichtet ist.

7. Messanordnung nach einem der vorangehenden Ansprüche, **dadurch gekennzeichnet, dass** die erste Datenschnittstelle zur Übermittlung der zeitlich gekennzeichneten Messdaten (19) in Echtzeit als HochgeschwindigkeitsSchnittstelle, vorzugsweise als LVDS-Schnittstelle, eingerichtet ist.

8. Messanordnung nach einem der Ansprüche 5 bis 7, **dadurch gekennzeichnet, dass** die erste Datenschnittstelle unidirektional zur Übermittlung der zeitlich gekennzeichneten Messdaten (19) von der Steuerungs- und Verarbeitungseinrichtung (15) an die Auswerteeinrichtung (18) und die zweite Datenschnittstelle bidirektional ausgebildet ist.

9. Messanordnung nach einem der vorangehenden Ansprüche, **dadurch gekennzeichnet, dass** die Auswerteeinrichtung (18) eine Messmodulerkennungseinheit umfasst, die zur Ermittlung von den Messmodulen (14) jeweils zugeordneten Modulkennungen über die zweite Datenschnittstelle ausgebildet und eingerichtet ist.

10. Strangmaschine (11) zum Herstellen von Strängen (12) und/oder Strangabschnitten der Tabak verarbeitenden Industrie mit einer Messanordnung (10) nach einem der Ansprüche 1 bis 9.

11. Verfahren zum Messen von in Strangmaschinen (11) und/oder Filteransetzmaschinen und/oder Multifilterherstellungsmaschinen hergestellten und geförderten Strängen (12) und/oder Strangabschnitten und/oder stabförmige Artikel der Tabak verarbeitenden Industrie mittels einer Messanordnung (10), umfassend einen Messkopf (13), der mindestens zwei Messmodule (14) unterschiedlicher Messfunktion und eine Steuer- und Verarbeitungseinrichtung (15) aufweist, umfassend
Übermitteln der von den Messmodulen (14) erzeugten Messdaten (16) an die Steuerungs- und Verarbeitungseinrichtung (15),
**gekennzeichnet durch**
zeitliches Steuern der Messmodule (14) über eine Steuerungsschnittstelle zur Steuerung und/oder Parametrierung der Messmodule (14),
Kennzeichnen der jeweiligen von den Messmodulen (14) erzeugten Messdaten (16) mittels zeitlicher Kennungen als zeitlich gekennzeichnete Messdaten (19),
Übermitteln der zeitlich gekennzeichneten Messdaten (19) von der Steuerungs- und Verarbeitungseinrichtung an eine insbesondere räumlich getrennt angeordnete Auswerteeinrichtung (18) über mindestens eine erste Datenschnittestelle,
Zuordnen der über die erste Datenschnittstelle an die Auswerteeinrichtung (18) übermittelten und zeitlich gekennzeichneten Messdaten (19) von Messmodulen jeweils unterschiedlicher Messfunktion auf Basis der zeitlichen Kennungen und
Analysieren der zeitlich zugeordneten Messdaten (19).

12. Verfahren nach Anspruch 11, **dadurch gekennzeichnet, dass** das Analysieren der zeitlich gekennzeichneten Messdaten (19) mit jeweils gleichen und/oder jeweils voneinander verschiedenen der zeitlichen Kennungen erfolgt.

13. Verfahren nach einem der Ansprüche 11 oder 12, **gekennzeichnet durch** zyklisches Speichern der über die erste Datenschnittstelle an die Auswerteeinrichtung (18) übermittelten zeitlich gekennzeichneten Messdaten (19) in mindestens einem Speichermittel (24) mit mehreren Speicherbereichen (25).

14. Verfahren nach einem der Ansprüche 11 bis 13, **gekennzeichnet durch** Ausführen mindestens eines Analyseprogramms (26) mittels einer programmierbaren Steuerung, wobei das Analyseprogramm (26) auf jeden der mehreren Speicherbereiche (25) zugreifen kann.

15. Verfahren nach einem der Ansprüche 11 bis 14, **gekennzeichnet durch** Serialisieren der Messdaten (16) mittels einer Serialisierungseinheit (27) und Übermitteln der serialisierten und zeitlich gekennzeichneten Messdaten (19) an eine Zuordnungseinheit (20) der Auswerteinrichtung (18)

16. Verfahren nach einem der Ansprüche 11 bis 15, **dadurch gekennzeichnet, dass** die Übermittlung der zeitlich gekennzeichneten Messdaten (19) über die erste Datenschnittstellen unidirektional von der Steuerungs- und Verarbeitungseinrichtung (15) an die Auswerteeinrichtung (18) erfolgt.

17. Verfahren nach einem der Ansprüche 11 bis 16, **gekennzeichnet durch** Ermitteln von den Messmodulen (14) zugeordneten Modulkennungen über eine zweite Datenschnittstelle.

## Claims

1. Measuring arrangement (10) for measuring rods (12) and/or rod sections and/or rod-shaped articles of the tobacco-processing industry produced and conveyed in rod makers (11) and/or filter assembly machines or multifilter manufacturing machines, comprising
a measuring head (13), having at least two measuring modules (14) of different measuring function and a control and processing device (15),
wherein the measuring modules (14) are each connected via at least one measurement data interface for transmitting the measurement data (16) generated by the measuring modules (14) to the control and processing device (15) and via a control interface for controlling and or parameterisation of the measuring modules (14) with the control and processing device (15),
**characterised in that**
the control and processing device (15) comprises at least one clock pulse generator configured and adapted for chronological control of the measuring modules (14) and for marking the corresponding measurement data (16), generated by the measuring modules (14), as chronologically marked measurement data (19) using chronological identifiers and
the control and processing device (15) is connected via at least one first data interface designed for transmitting chronologically marked measurement data (19) to an evaluation device (18), arranged in particular to be spatially separate,
wherein the evaluation device (18) comprises an allocation unit (20) designed for chronologically allocating the measurement data (19), transmitted and chronologically marked by measuring modules (14) each with different measuring functions based on the chronological identifiers, and an analysis unit (21) configured to analyse the chronologically allocated measurement data.

2. Measuring arrangement according to claim 1, **characterised in that** the analysis unit (21) is configured and adapted for analysis of the chronologically marked measurement data (19), in each case with identical chronological identifiers and/or with different chronological identifiers from each other.

3. Measuring arrangement according to one of claims 1 or 2, **characterised in that** the allocation unit (20) comprises a memory access controller (23) for cyclic storage of the chronologically marked measurement data (19), transmitted via the first data interface, in at least one memory means (24) having a plurality of memory areas (25).

4. Measuring arrangement according to claim 3, **characterised in that** the analysis unit (21) comprises a programmable controller for executing at least one analysis program (26), wherein the programmable controller is configured and adapted to access each of the memory areas (25).

5. Measuring arrangement according to any one of the preceding claims, **characterised in that** the control and processing device (15) and the evaluation device (18) comprise a second data interface designed for transmitting control and/or parameterisation data between the control and processing device (15) and the evaluation device (18).

6. Measuring arrangement according to any one of the preceding claims, **characterised in that** the control and processing device (15) comprises a serialisation unit (27) which is configured and adapted for converting the measurement data (16) generated by the measuring modules (14) into a serial data stream.

7. Measuring arrangement according to any one of the preceding claims, **characterised in that** the first data interface is configured as a high-speed interface, preferably as an LVDS interface, for transmitting the chronologically marked measurement data (19) in real time.

8. Measuring arrangement according to any one of claims 5 to 7, **characterised in that** the first data interface is designed unidirectionally for transmitting the chronologically marked measurement data (19) from the control and processing device (15) to the evaluation device (18) and the second data interface is designed bidirectionally.

9. Measuring arrangement according to any one of the preceding claims, **characterised in that** the evaluation device (18) comprises a measuring module identification unit which is configured and adapted to detect module identifiers allocated in each case by the measuring modules (14) via the second data interface.

10. Rod maker (11) for producing rods (12) and/or rod sections of the tobacco-processing industry having a measuring arrangement (10) according to any one of claims 1 to 9.

11. Method for measuring rods (12) and/or rod sections and/or rod-shaped articles of the tobacco-processing industry produced and conveyed in rod makers (11) and/or filter assembly machines and/or multifilter manufacturing machines using a measuring arrangement (10) comprising a measuring head (13), having at least two measuring modules (14) of different measuring function and a control and processing device (15), comprising
transmitting of the measurement data (16) generated by the measuring modules (14) to the control and processing device (15),
**characterised by**
chronological controlling of the measuring modules (14) via a control interface for control and/or parameterisation of the measuring modules (14).
marking of the corresponding measurement data (16), generated by the measuring modules (14), as chronologically marked measurement data (19) using chronological identifiers,
transmitting of the chronologically marked measurement data (19) by the control and processing device to an evaluation device (18), arranged in particular to be spatially separate, via at least one first data interface,
allocating of the measurement data (19) transmitted via the first data interface to the evaluation device (18) and chronologically marked by measuring modules each with different measuring functions based on the chronological identifiers and
analysing the chronologically assigned measurement data (19).

12. Method according to claim 11, **characterised in that** analysing the chronologically marked measurement data (19) takes place in each case with identical chronological identifiers and/or with different chronological identifiers different from each other.

13. Method according to one of claims 11 or 12, **characterised by** cyclic storage of the chronologically marked measurement data (19), transferred via the first data interface to the evaluation device (18), in at least one memory means having a plurality of memory areas (25).

14. Method according to any one of claims 11 to 13, **characterised by** execution of at least one analysis program (26) using a programmable controller, wherein the analysis program (26) can access each of the plurality of memory areas (25).

15. Method according to any one of claims 11 to 14, **characterised by** serialising the measurement data (16) using a serialisation unit (27) and transmitting the serialised and chronologically marked measurement data (19) to an allocation unit (20) of the evaluation device (18).

16. Method according to any one of claims 11 to 15, **characterised in that** transmission of the chronologically marked measurement data (19) takes place via the first data interfaces unidirectionally from the control and processing device (15) to the evaluation device (18).

17. Method according to any one of claims 11 to 16, **characterised by** determining module identifiers assigned to the measuring modules (14) via a second data interface.

## Revendications

1. Dispositif de mesure (10) pour la mesure de tiges (12) et/ou sections de tiges et/ou articles en forme de tige de l'industrie de traitement du tabac fabriquées et transportées dans des machines de fabrication de tiges (11) et/ou machines de pose de filtres ou machines de fabrication de multifiltres, comprenant
une tête mesure (13), qui présente au moins deux modules de mesure (14) à fonction de mesure différente et un dispositif de commande et de traitement (15),
dans lequel les modules de mesure (14) sont reliés au dispositif de commande et de traitement (15) respectivement par le biais d'au moins une interface de données de mesure pour la transmission des données de mesure (16) générées par les modules de mesure (14) au dispositif de commande et de traitement (15) ainsi que par le biais d'une interface de commande pour la commande et/ou le paramétrage des modules de mesure (14),
**caractérisé en ce que**
le dispositif de commande et de traitement (15) comprend au moins un générateur de cadence aménagé et réalisé pour la commande temporelle des modules de mesure (14) et pour le marquage des données de mesure (16) respectives générées par les modules de mesure (14) au moyen d'identifiants temporels en tant que données de mesure marquées temporellement (19) et
le dispositif de commande et de traitement (15) est relié à un dispositif d'évaluation (18), agencé en particulier séparé dans l'espace, par le biais d'au moins une première interface de données réalisée pour la transmission de données de mesure marquées temporellement (19),
dans lequel le dispositif d'évaluation (18) comprend une unité d'affectation (20) réalisée pour l'affectation temporelle des données de mesure (19) transmises par le biais de la première interface de données et marquées temporellement de modules de mesure (14) à fonction de mesure respectivement différente sur la base des marquages temporels et une unité d'analyse (21) aménagée pour l'analyse des données de mesure affectées temporellement.

2. Dispositif de mesure selon la revendication 1, **caractérisé en ce que** l'unité d'analyse (21) est réalisée et aménagée pour l'analyse des données de mesure marquées temporellement (19) avec des identifiants respectivement identiques et/ou respectivement différents les uns des autres des identifiants temporels.

3. Dispositif de mesure selon l'une quelconque des revendications 1 ou 2, **caractérisé en ce que** l'unité d'affectation (20) comprend une commande d'accès mémoire (23) pour l'enregistrement cyclique des données de mesure marquées temporellement (19) transmises par le biais de la première interface de données dans au moins un moyen de stockage (24) avec plusieurs zones de mémoire (25).

4. Dispositif de mesure selon la revendication 3, **caractérisé en ce que** l'unité d'analyse (21) comprend au moins une commande programmable pour la réalisation d'au moins un programme d'analyse (26), dans lequel la commande programmable est réalisée et aménagée pour l'accès à chacune des zones de mémoire (25).

5. Dispositif de mesure selon l'une quelconque des revendications précédentes, **caractérisé en ce que** le dispositif de commande et de traitement (15) ainsi que le dispositif d'évaluation (18) comprennent une deuxième interface de données réalisée pour la transmission de données de commande et/ou de paramétrage entre le dispositif de commande et de traitement (15) et le dispositif d'évaluation (18).

6. Dispositif de mesure selon l'une quelconque des revendications précédentes, **caractérisé en ce que** le dispositif de commande et de traitement (15) comprend une unité de sérialisation (27), qui est réalisée et aménagée pour convertir les données de mesure (16) générées par les modules de mesure (14) en un flux de données sériel.

7. Dispositif de mesure selon l'une quelconque des revendications précédentes, **caractérisé en ce que** la première interface de données est aménagée pour la transmission de données de mesure marquées temporellement (19) en temps réel en tant qu'interface haute vitesse, de préférence en tant qu'interface LVDS.

8. Dispositif de mesure selon l'une quelconque des revendications 5 à 7, **caractérisé en ce que** la première interface de données est réalisée de manière unidirectionnelle pour la transmission de données de mesure marquées temporellement (19) du dispositif de commande et de traitement (15) à l'unité d'évaluation (18) et la deuxième interface de données est réalisée de manière bidirectionnelle.

9. Dispositif de mesure selon l'une quelconque des revendications précédentes, **caractérisé en ce que** le dispositif d'évaluation (18) comprend une unité d'identification de module de mesure, qui est réalisée et aménagée pour la détermination d'identifiants de module affectés respectivement aux modules de mesure (14) par le biais de la deuxième interface de données.

10. Machine de fabrication de tiges (11) pour la fabrication de tiges (12) et/ou sections de tiges de l'industrie de traitement du tabac avec un dispositif de mesure (10) selon l'une quelconque des revendications 1 à 9.

11. Procédé de mesure de tiges (12) et/ou sections de tiges et/ou articles en forme de tige de l'industrie de traitement du tabac fabriquées et transportées dans des machines de fabrication de tiges (11) et/ou machines de pose de filtres et/ou machines de fabrication de multifiltres, au moyen d'un dispositif de mesure (10), comprenant une tête mesure (13), qui présente au moins deux modules de mesure (14) à fonction de mesure différente et un dispositif de commande et de traitement (15), comprenant
la transmission des données de mesure (16) générées par les modules de mesure (14) au dispositif de commande et de traitement (15),
**caractérisé par**
la commande temporelle des modules de mesure (14) par le biais d'une interface de commande pour la commande et/ou le paramétrage des modules de mesure (14),
le marquage des données de mesure (16) respectives générées par les modules de mesure (14) au moyen d'identifiants temporels en tant que données de mesure marquées temporellement (19) et
la transmission des données de mesure marquées temporellement (19) du dispositif de commande et de traitement à un dispositif d'évaluation (18) agencé, en particulier séparé dans l'espace, par le biais d'au moins une première interface de données,
l'affectation des données de mesure (19) marquées temporellement et transmises au dispositif d'évaluation (18) par le biais de la première interface de données de modules de mesure à fonction de mesure respectivement différente sur la base des marquages temporels et
l'analyse des données de mesure affectées temporellement (19).

12. Procédé selon la revendication 11, **caractérisé en ce que** l'analyse des données de mesure marquées temporellement (19) a lieu avec des identifiants respectivement identiques et/ou respectivement différents les uns des autres des identifiants temporels.

13. Procédé selon l'une quelconque des revendications 11 ou 12, **caractérisé par** l'enregistrement cyclique des données de mesure marquées temporellement (19) transmises à l'unité d'évaluation (18) par le biais de la première interface de données dans au moins un moyen de stockage (24) avec plusieurs zones de mémoire (25).

14. Procédé selon l'une quelconque des revendications 11 à 13, **caractérisé par** la réalisation d'au moins un programme d'analyse (26) au moyen d'une commande programmable, dans lequel le programme d'analyse (26) peut accéder à chacune des plusieurs zones de mémoire (25).

15. Procédé selon l'une quelconque des revendications 11 à 14, **caractérisé par** la sérialisation des données de mesure (16) au moyen d'une unité de sérialisation (27) et transmission des données de mesure marquées temporellement et sérialisées (19) à une unité d'affectation (20) du dispositif d'évaluation (18).

16. Procédé selon l'une quelconque des revendications 11 à 15, **caractérisé en ce que** la transmission des données de mesure marquées temporellement (19) a lieu par le biais de la première interface de données de manière unidirectionnelle du dispositif de commande et de traitement (15) à l'unité d'évaluation (18).

17. Procédé selon l'une quelconque des revendications 11 à 16, **caractérisé par** la détermination d'identifiants de module affectés aux modules de mesure (14) par le biais d'une deuxième interface de données.
